# EUROPÄISCHE PATENTANMELDUNG

(11) **EP 2 067 937 A2**
(43) Veröffentlichungstag der Anmeldung: **10.06.2009**
(21) Anmeldenummer: 07016780.4
(22) Anmeldetag: 27.08.2007
(51) Int. Cl.: F01K 23/06, F23L 7/00

(54) **Verfahren zum Betrieb einer Kraftwerksanlage mit integrierter Vergasung sowie Kraftwerksanlage**

(71) Anmelder: SIEMENS AKTIENGESELLSCHAFT, 80333 München (DE)
(72) Erfinder: Graeber, Carsten, 91056 Erlangen (DE); Zimmermann, Gerhard, Dr., 91315 Höchstadt/Aisch (DE)

(57) **Zusammenfassung**

Die Erfindung betrifft ein Verfahren zum Betrieb einer Kraftwerksanlage (1) mit integrierter Vergasungseinrichtung (6), bei dem ein fossiler Brennstoff (26) vergast und als Synthesegas (17) einem einer Gasturbine (2) zugeordneten Brenner (4) zur Verbrennung zugeführt wird, wobei bei einer Prozesstemperatur mittels einer Membran (10) aus Luft (18) Sauerstoff (19) abgeschieden wird, wobei sauerstoffabgereicherte Luft (20) gebildet wird, wobei der abgeschiedene Sauerstoff (19) der Vergasungseinrichtung (6) zur Reaktion mit dem fossilen Brennstoff zugeführt wird, und zur Aufrechterhaltung der erforderlichen Prozesstemperatur der Membran (10) Heizenergie zugeführt wird, wobei die Heizenergie zu einem Teil aus dem Synthesegas (17) und zu einem weiteren Teil aus dem Sauerstoff (19) und/oder der sauerstoffabgereicherten Luft (20) in einem Wärmetausch mit der Luft (18) gewonnen wird, und die aufgeheizte Luft (18) der Membran (10) zugeführt wird.

## Beschreibung

Die Erfindung betrifft ein Verfahren zum Betrieb einer Kraftwerksanlage mit integrierter Vergasung sowie eine Kraftwerksanlage.

Eine derartige IGCC-Anlage ist beispielsweise aus der WO 03/008768 bekannt. Diese Anlage weist eine Vergasungseinrichtung auf, in der z.B. partikelförmige Kohle zusammen mit Sauerstoff und Dampf zu einem Synthesegas umgewandelt wird (Partialoxidation). Das Synthesegas wird - nach mehreren Aufbereitungsschritten - als gasförmiger Brennstoff einer Gasturbinenbrennkammer zugeführt. Bei der WO 03/008768 ist zur Sauerstoffgewinnung eine kryogene Luftzerlegungsanlage (=LZA) in die IGCC-Anlage implementiert. Diese zerlegt die Luft in einem thermodynamischen Prozess in ihre wesentlichen Bestandteile Stickstoff und Sauerstoff. Der in der LZA gewonnene Sauerstoff wird der Vergasungseinrichtung zugeführt.

Alternativ zu den kryogenen Luftzerlegungsanlagen sind inzwischen zur Abscheidung von Sauerstoff Aggregate auf Membranbasis vorgeschlagen worden. Die Sauerstoffionen-leitenden Membranen führen zu einer zumindest teilweisen Abscheidung des Sauerstoffs aus der Luft. Der Ersatz der kryogenen Luftzerlegungsanlage durch eine Membran wird als mögliche Option zur Wirkungsgradsteigerung bei konventionellen IGCC-Kraftwerken angesehen. Ferner lässt die Implementierung einer Membran eine Kompensation des Wirkungsgradverlustes bei CO2-freien Kraftwerkskonzepten erwarten.

Ein Beispiel für eine membranbasierte Sauerstoffabtrennung findet man in der U.S. 2004/0011057 A1, die eine IGCC-Anlage beschreibt, bei der sauerstoffreiches Gas über eine Membran produziert wird, wobei der Sauerstofftransport innerhalb der Membran durch Diffusion von Oxidionen erfolgt und die Membran über einen Wärmetauscher durch heiße Abgase der Turbine auf Betriebstemperatur gebracht bzw. gehalten wird.

Die US 5,562,754 beschreibt eine Methode der Sauerstoffabtrennung, bei der Sauerstoff enthaltendes Gas (Luft) durch Verbrennung eines Brennstoffes im Gasstrom direkt erhitzt wird, wodurch ein heißes, Sauerstoff enthaltendes Verbrennungsprodukt entsteht, das einer Membran zugeführt wird. Alternativ wird das Sauerstoff enthaltende Gas durch indirekten Wärmetausch mit einem Verbrennungsprodukt erhitzt, welches durch Verbrennung der bei der Sauerstoffabtrennung übriggebliebenen, sauerstoffarmen Luft mit Brennstoff entsteht.

Membranbasierte Anordnungen zur Sauerstoffabtrennung weisen allerdings den Nachteil auf, dass das Membranaggregat auf einer vergleichsweise hohen Betriebstemperatur gehalten werden muss, damit diese die Funktion ausführen kann. Es muss demnach Heizenergie dem Membranreaktor permanent zugeführt werden, damit dieser die erforderliche Prozesstemperatur für die Sauerstoffabscheidung aus der Luft aufweist.

Aufgabe der Erfindung ist es daher, ein Verfahren und eine Kraftwerksanlage vorzuschlagen, welche die o.g. Nachteile bei einer membranbasierten Sauerstoffabscheidung überwinden.

Diese Aufgabe wird erfindungsgemäß gelöst durch die Merkmale der Patentansprüche 1 und 19.

Weitere vorteilhafte Ausführungsformen sind in den Unteransprüchen genannt.

Im erfinderischen Verfahren wird zur Aufrechterhaltung der erforderlichen Prozesstemperatur der Membran Heizenergie zugeführt, wobei die Heizenergie aus dem Synthesegas und aus dem heißen Sauerstoff bzw. der heißen, sauerstoffabgereicherten Luft in einem Wärmetausch mit der Luft gewonnen wird, und die aufgeheizte Luft der Membran zu geführt wird.

Durch den Wärmetauschprozess und dessen vorteilhafte Ankopplung an das hohe Temperaturniveau des in der Vergasungseinrichtung gewonnenen Synthesegases (Rohgas) und der sich bei der Sauerstoffabtrennung ergebenden Ströme von Sauerstoff und sauerstoffabgereicherter Luft ergibt sich eine besonders effiziente Methode, die Luft auf die erforderliche Prozesstemperatur aufzuheizen und dann die aufgeheizte Luft dem Membranaggregat bereits temperaturrichtig zuzuführen.

Hierdurch kann auf besonders einfache Weise die Membran auf die Betriebstemperatur, typischerweise 700 °C bis 1000 °C, gebracht und gehalten werden. Ein Teil der vor der Sauerstoffabtrennung in die Luft gebrachten Heizenergie wird nach der Sauerstoffabtrennung vom Sauerstoff und von der sauerstoffabgereicherten Luft jeweils in einem indirekten Wärmetausch an die nachfolgende Luft abgegeben. Über einen Synthesegas/Luft-Wärmetausch wird die nachfolgende Luft dann vollends auf Membranbetriebstemperatur aufgeheizt.

Es ist dabei zweckmäßig, die Wärmetauscher in geeigneter Weise zueinander anzuordnen. Aufgrund der höheren Temperatur des Synthesegases, verglichen mit der Temperatur des Sauerstoffs bzw. der sauerstoffabgereicherten Luft, ist es vorteilhaft, den Sauerstoff/Luft-Wärmetauscher bzw. den sauerstoffabgereicherte Luft/Luft-Wärmetauscher dem Synthesegas/Luft-Wärmetauscher vorzuschalten. In einer anderen vorteilhaften Anordnung werden die drei Wärmetauscher parallel geschaltet und die Luftströme, nach der Erwärmung in den Wärmetauschern, zusammen- und als Gesamtluftstrom zur Membran geführt.

Um die Membran zu Beginn des Prozesses auf Betriebstemperatur zu bringen, ist es zweckmäßig, die Heizenergie aus dem Abgas einer separaten Verbrennung in einem Wärmetausch mit der Luft zu gewinnen. Das nach dem Wärmetausch mit der Luft abgekühlte Abgas wird vorteilhafterweise in einem Abhitzedampferzeuger zur Erzeugung von Wasserdampf genutzt.

Ebenso ist es vorteilhaft, das nach dem Wärmetausch mit der Luft abgekühlte Synthesegas in einem dem Synthesegas/Luft-Wärmetauscher nachgeschalteten Abhitzedampferzeuger zur Erzeugung von Wasserdampf zu nutzen.

Weiterhin ist es vorteilhaft, das Synthesegas nach dem Wärmetausch mit der Luft weiter aufzubereiten, insbesondere zu reinigen, bevor es einer CO-Shift-Reaktion unterzogen wird. Danach werden die Hauptbestandteile CO2 und Wasserstoff vorteilhafterweise getrennt. Bedarfsweise wird der Wasserstoff mit einem Inertmedium, vorzugsweise Wasserdampf (H₂O), verdünnt, bevor er in einer Gasturbine verbrannt wird.

Die für die Sauerstoffabtrennung benötige verdichtete Luft wird zweckmäßigerweise als Verdichterentnahmeluft einem einer Gasturbine zugeordneten Verdichterteil entnommen, wobei die Entnahme der Luft vorteilhafterweise nach der Endstufe am Verdichteraustritt oder wahlweise bei einem geringeren Druckniveau der Verdichterluft durchgeführt wird.

Die nach der Sauerstoffabtrennung "übriggebliebene" und in einem Wärmetausch mit der vom Verdichter kommenden Luft abgekühlte sauerstoffabgereicherte Luft wird vorteilhafterweise als Verbrennungsluft dem Brenner der Gasturbine zugeführt, wodurch sich die Temperatur der Verbrennung in vorteilhafter Weise absenkt. Anders als bei kryogen arbeitenden Luftzerlegungsanlagen steht nämlich nach der Sauerstoffabtrennung durch die Membran kein ausreichend reiner Stickstoff als Produkt zur Verfügung, der dem Synthesegas beigemischt werden könnte, um die Verbrennungscharakteristik zu verbessern. Die Beimischung von Luft verbietet sich wegen des Sauerstoffanteils.

Abgase der Gasturbine werden zweckmäßigerweise in einem der Gasturbine nachgeschalteten Abhitzedampferzeuger zur Erzeugung von Wasserdampf genutzt. Der überhitzte Wasserdampf kann dann vorteilhafterweise in einer Dampfturbine oder als Verdünnungsmedium des Brennstoffs bzw. zur Inertisierung des Brennstoffs sowie als Trägergas bei der Förderung zur Vergasungseinrichtung verwendet werden. Wird allerdings CO2 aus dem Synthesegas abgeschieden, ist es zweckmäßig, den Brennstoff mit CO2 zu inertisieren bzw. CO2 als Trägergas zu verwenden und den erzeugten Dampf vorteilhafterweise in einer Dampfturbine zu nutzen.

Die erfinderische Kraftwerksanlage umfasst eine Gasturbine, der eine Brennkammer mit mindestens einem Brenner zugeordnet ist, ein der Brennkammer vorgeschaltetes Brennstoffaufbereitungssystem, das eine Vergasungseinrichtung mit einer Brennstoffzufuhrleitung für fossilen Brennstoff und eine von der Vergasungseinrichtung abzweigende und in die Brennkammer mündende Gasleitung aufweist, eine Membraneinheit zur Abscheidung von Sauerstoff aus Luft, wobei die Membraneinheit mit ihrer sauerstoffseitigen Entnahmeseite über eine Sauerstoffleitung an die Vergasungseinrichtung angeschlossen ist (eventuell benötigt auch der Entschwefelungsprozess Sauerstoff). Die von der Vergasungseinrichtung abzweigende Gasleitung ist primärseitig an einen ersten Wärmetauscher angeschlossen, so dass sekundärseitig die dem Wärmetauscher zustellbare Luft auf eine Prozesstemperatur aufheizbar und der Membraneinheit zuführbar. Ein zweiter Wärmetauscher ist primärseitig in die Sauerstoffleitung geschaltet und sekundärseitig der Membraneinheit vorgeschaltet, so dass die dem zweiten Wärmetauscher zustellbare Luft aufheizbar ist und / oder ein dritter Wärmetauscher ist primärseitig in eine von der Membraneinheit abzweigende Abluftleitung geschaltet und sekundärseitig der Membraneinheit vorgeschaltet, so dass die dem dritten Wärmetauscher zustellbare Luft aufheizbar ist.

Der zweite und/oder dritte Wärmetauscher können mit dem ersten Wärmetauscher in Reihe oder parallel geschaltet sein.

Wenn die Synthesegasabwärme nicht auf ausreichend hohem Energieniveau ist, z.B. beim Anfahren des Vergasers, ist es vorteilhaft, wenn an die Gasleitung, vor dem ersten Wärmetauscher, ein Brenner geschaltet ist und die Gasleitung vor dem Brenner schließbar ist, um die Membran durch indirekten Wärmetausch mit dem Abgas aus einer separaten Verbrennung (mit Erdgas, Synthesegas, etc.) auf Betriebstemperatur zu bringen.

Es ist zweckmäßig, wenn die abgekühlten Abgase des Brenners, wie auch die Abgase der Gasturbinenanlage einem Abhitzedampferzeuger zur Dampferzeugung zustellbar sind.

Ein Abhitzedampferzeuger ist auch für die Nutzung der Wärme des Synthesegases nach Durchlaufen des ersten Wärmetauschers vorteilhaft. Vorteilhafterweise umfasst die erfinderische Kraftwerksanlage auch eine Synthesegasreinigungseinrichtung, einen CO-Shift-Reaktor für die CO-Konvertierung im Synthesegas (CO + H₂O -> CO₂ + H₂) sowie eine CO2-Abscheideeinrichtung, mittels derer CO2 aus dem Synthesegas abscheidbar ist.

Bei nicht-kryogen arbeitenden Sauerstoffabtrennungsanlagen, in denen kein ausreichend reiner Stickstoff bei der Sauerstoffabtrennung anfällt, kann eine verbesserte Verbrennung durch Zufuhr von Wasserdampf zum Synthesegas bzw. durch Einleiten der sauerstoffabgereicherten Luft in die Brennkammer erzielt werden.

Im Falle eines konventionellen IGCC-Kraftwerks ist es vorteilhaft, wenn überhitzter Wasserdampf der Brennstoffaufbereitung als Trägergas und zur Inertisierung sowie der Vergasungseinrichtung zuleitbar ist.

Im Falle eines ZEIGCC, d.h. IGCC mit CO2-Abscheidung, ist es vorteilhaft, wenn im Normalbetrieb entsprechend verdichtetes, abgeschiedenes CO2 als Inertisierungsmedium bzw. Trägergas verwendbar ist. Falls keine CO2-Abscheidung stattfindet, wie z.B. beim Anfahren oder im Störfall, ist es zweckmäßig, wenn, wie im Fall eines konventionellen Kraftwerks, überhitzter Wasserdampf der Brennstoffaufbereitung zuleitbar ist.

Vorteilhafterweise ist die Membran eine sauerstoffionenleitende Membran.

Vorzugsweise umfasst die Kraftwerksanlage einen Verdichterteil zur Bereitstellung verdichteter Luft sowohl für die Sauerstoffabtrennungsanlage, als auch für die Brennkammer.

Die Erfindung wird anhand von Ausführungsbeispielen näher erläutert, die in den Zeichnungen dargestellt sind.

Es zeigen:
- Figur 1: ein Konzept zur Einbindung einer membranbasierten Sauerstoffabtrennungsanlage in den IGCC-Prozess,
- Figur 2: ein Konzept zur Einbindung einer membranbasierten Sauerstoffabtrennungsanlage in den IGCC-Prozess mit einem zusätzlichen Brenner,
- Figur 3: eine Anordnung der Wärmetauscher wie in Figur 1,
- Figur 4: eine parallele Anordnung aller drei Wärmetauscher und
- Figur 5: eine Ausführungsform der Synthesegasleitung am ersten Wärmetauscher.

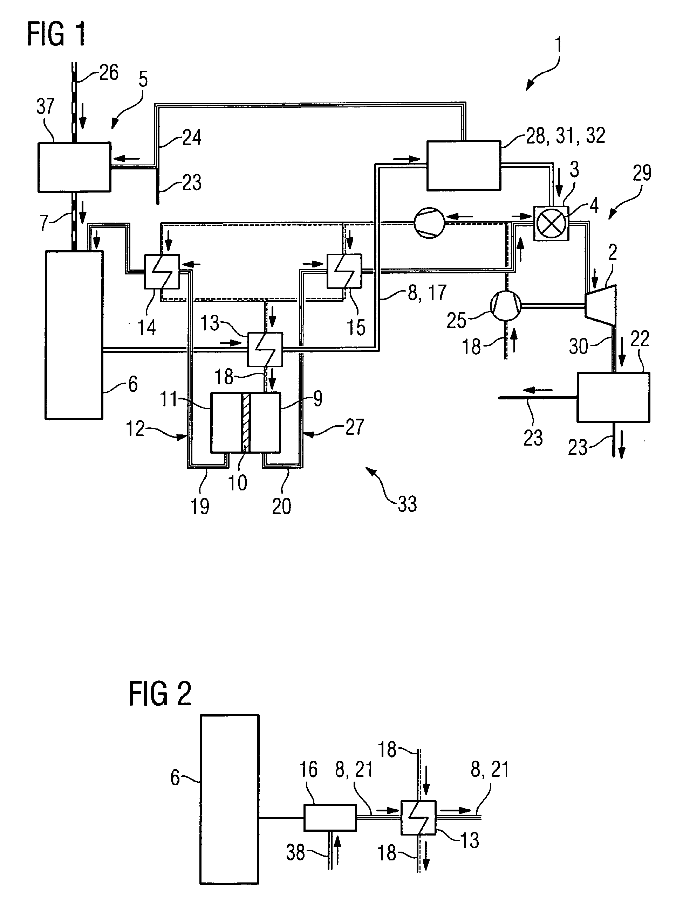

Die Figur 1 zeigt eine Kraftwerksanlage 1 mit integrierter Vergasungseinrichtung 6 (IGCC-Anlage, integrated gasification combined cycle) und Sauerstoffabtrennungsanlage 33.

Die Kraftwerksanlage 1 weist eine Gasturbinenanlage 29, umfassend einen Verdichterteil 25, eine Brennkammer 3 mit mindestens einem Brenner 4 und eine Gasturbine 2 auf. Abgasseitig ist der Gasturbine 2 ein Abhitzedampferzeuger 22 nachgeschaltet. Der Abhitzedampferzeuger 22 ist in den WasserDampf-Kreislauf einer nicht näher dargestellten Dampfturbinenanlage geschaltet, so dass eine "combined-cycle" bzw. Gas- und Dampfturbinenanlage (GuD) realisiert ist. Heiße Abgase 30 bzw. Rauchgase aus der Gasturbine 2 erhitzen und verdampfen dabei in dem Abhitzedampferzeuger 22 Wasser zu Dampf 23, der in der Dampfturbine oder zur Inertisierung bei der Brennstoffaufbereitung 37 bzw. für die Brennstoffförderung zur Vergasungseinrichtung 6 nutzbar ist.

Das Brennstoffaufbereitungssystem 5 umfasst eine Vergasungseinrichtung 6, die eine Zufuhrleitung 7 für den fossilen Brennstoff und eine Sauerstoffleitung 12 aufweist, die in die Vergasungseinrichtung 6 einmündet. In der Vergasungseinrichtung 6 wird der fossile Brennstoff 26 zusammen mit Sauerstoff 19 partiell verbrannt, so dass ein niederkalorisches Brenngas, das Synthesegas 17, gebildet wird, das dem der Gasturbine 2 zugeordneten Brenner 4 über eine Gasleitung 8 zur Verbrennung zugeführt wird.

Bei einer Prozesstemperatur wird in einer Membraneinheit 9 mittels einer Membran 10 aus Luft 18 Sauerstoff 19 abgeschieden, wobei der abgeschiedene Sauerstoff 19 von der sauerstoffseitigen Entnahmeseite 11 der Membraneinheit 9 der Vergasungseinrichtung 6 zur Reaktion mit dem fossilen Brennstoff 26 über die Sauerstoffleitung 12 zugeführt wird.

Zur Aufrechterhaltung der erforderlichen Prozesstemperatur wird der Membran 10 Heizenergie zugeführt. Die Heizenergie wird aus dem Synthesegas 17 und zusätzlich aus den heißen Strömen des Sauerstoffs 19 und der sauerstoffabgereicherten Luft 20 in einem Wärmetausch mit der Luft 18 gewonnen. Die aufgeheizte Luft 18 wird der Membran 10 zugeführt. In Figur 1 ist ein erster (Synthesegas/Luft-) Wärmetauscher 13 den parallel geschalteten zweiten (Sauerstoff/Luft-) 14 und dritten (sauerstoffabgereicherte Luft/Luft-) Wärmetauschern 15 nachgeschaltet.

Die der Membran 10 zugeführte Luft 18 wird im Wärmetausch mit dem Sauerstoff 19, der sauerstoffabgereicherten Luft 20 und dem Synthesegas 17 auf 700 °C bis 1000 °C, vorzugsweise 800 °C bis 900 °C, aufgeheizt, um eine ausreichende Betriebstemperatur der Membraneinheit 9 zu gewährleisten.

Nach dem Wärmetausch mit der Luft 18 kann die sauerstoffabgereicherte Luft 20 über die Abluftleitung 27 als Kühlluft der Gasturbine 2 und/oder als Verbrennungsluft dem Brenner 4 zugeführt werden.

Das Synthesegas 17 durchläuft, bevor es dem Brenner 3 zugeführt wird, eine Synthesegasabhitzenutzungseinrichtung 31, eine Gasreinigungseinrichtung 32, sowie eine optionale CO2-Abscheideinrichtung 28. Das abgeschiedene CO2 24 kann zu Inertisierungszwecken und als Trägergas der Brennstoffaufbereitung 37 zugeführt werden. Im Falle eines konventionellen IGCC-Kraftwerks (ohne CO2-Abscheidung) wird hierfür überhitzter Wasserdampf 23 auf entsprechendem Druckniveau verwendet.

Figur 2 zeigt als Ausführungsbeispiel der erfinderischen Kraftwerksanlage 1 das Prinzip einer membranbasierten Sauerstoffabtrennungsanlage 33 mit einem zusätzlichen Brenner 16 für den Fall, dass Wärme nicht in ausreichender Form zur Verfügung steht, wie beispielsweise beim Anfahren der Anlage 1, oder im Störfall. Die nachfolgenden Beschreibungen beschränken sich im Wesentlichen auf die Unterschiede zum Ausführungsbeispiel aus Figur 1 auf das bezüglich gleich bleibender Merkmale und Funktionen verwiesen wird. Im Wesentlichen gleich bleibende Bauteile werden grundsätzlich mit den gleichen Bezugszeichen beziffert.

Die Erwärmung der Luft 18, die der Membran 10 zugeführt werden soll, geschieht durch indirekten Wärmetausch der Luft 18 mit dem Abgas 21 aus einer separaten Verbrennung, beispielsweise von Erdgas 38. Zu diesem Zweck wird ein Brenner 16 in die Gasleitung 8 zwischen Vergasungseinrichtung 6 und erstem Wärmetauscher 13 geschaltet. Solange der Brenner 16 in Betrieb ist, ist die Gasleitung 8 zwischen Vergasungseinrichtung 6 und Brenner 16 geschlossen.

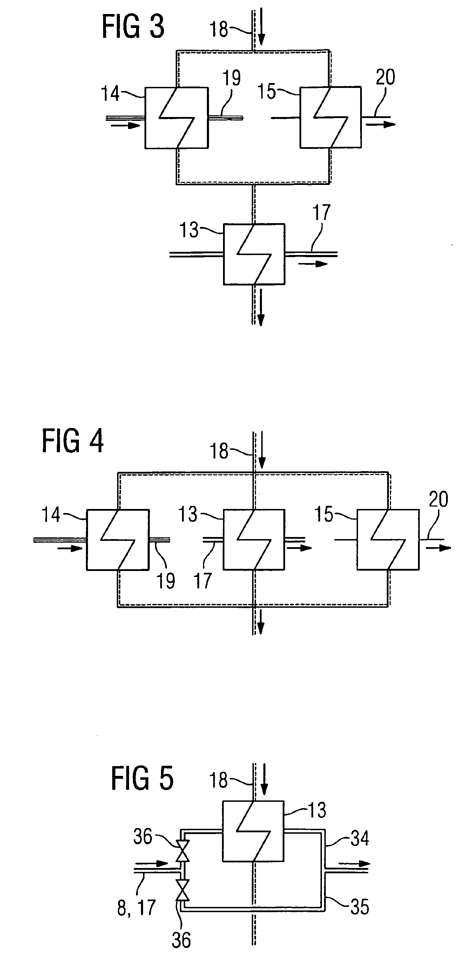

Figur 3 zeigt noch einmal die in Figur 1 bereits erläuterte Verschaltung der Wärmetauscher. Die Luft 18 wird dabei zunächst in zwei Teilströme aufgeteilt, und durchströmt die zueinander parallel geschalteten zweiten 14 und dritten Wärmetauscher 15, wobei sie Wärme vom heißen Sauerstoff und von der heißen sauerstoffabgereicherten Luft aufnimmt. Zur weiteren Erwärmung durchströmt die Luft den zum zweiten 14 und dritten Wärmetauscher 15 in Reihe geschalteten ersten Wärmetauscher 13, wo sie im Wärmetausch mit dem Synthesegas auf die benötigte Betriebstemperatur der Membran 10 (s. Fig. 1) aufgeheizt wird.

Figur 4 zeigt als Ausführungsbeispiel der erfinderischen Kraftwerksanlage 1 mit IGCC-Prozess das Prinzip einer membranbasierten Sauerstoffabtrennungsanlage 33 mit parallel geschalteten Wärmetauschern 13,14,15. Luft 18 wird in drei Teilströme aufgeteilt und jeweils im indirekten Wärmetausch mit entweder dem heißen Synthesegas im ersten Wärmetauscher 13, und/oder dem heißen Sauerstoff im zweiten Wärmetauscher 14, und/oder der heißen, sauerstoffabgereicherten Luft im dritten Wärmetauscher 15 erwärmt. Nach der Erwärmung werden die Teilströme zusammengeführt.

Figur 5 zeigt eine alternative Führung der Gasleitung 8 für das Synthesegas 17 im Bereich des ersten Wärmetauschers 13. Zur einfacheren Temperaturregelung der im Wärmetausch mit dem Synthesegas 17 erwärmten Luft wird die Gasleitung 8 in zwei Teilleitungen 34,35 aufgeteilt, wobei eine erste Teilleitung 34 zum ersten Wärmetauscher 13 führt und eine zweite Teilleitung 35 als Bypass um den ersten Wärmetauscher 13 herum geführt wird. Ventile 36 regeln die Aufteilung des Synthesegases 17 auf die beiden Teilleitungen 34,35.

## Patentansprüche

1. Verfahren zum Betrieb einer Kraftwerksanlage (1) mit integrierter Vergasungseinrichtung (6), bei dem ein kohlenstoffhaltiger Brennstoff (26) vergast und als Synthesegas (17) einem einer Gasturbine (2) zugeordneten Brenner (4) zur Verbrennung zugeführt wird, wobei bei einer Prozesstemperatur mittels einer Membran (10) aus Luft (18) Sauerstoff (19) abgeschieden wird, wobei sauerstoffabgereicherte Luft (20) gebildet wird, wobei der abgeschiedene Sauerstoff (19) zumindest teilweise der Vergasungseinrichtung (6) zur Reaktion mit dem fossilen Brennstoff zugeführt wird, und zur Aufrechterhaltung der erforderlichen Prozesstemperatur der Membran (10) Heizenergie zugeführt wird,
**dadurch gekennzeichnet dass** die Heizenergie zu einem Teil aus dem Synthesegas (17) und zu einem weiteren Teil aus dem Sauerstoff (19) und/oder der sauerstoffabgereicherten Luft (20) in einem Wärmetausch mit der Luft (18) gewonnen wird, und die aufgeheizte Luft (18) der Membran (10) zugeführt wird.

2. Verfahren nach Anspruch 1,
bei dem der Wärmetausch zwischen Sauerstoff (19) und Luft (18) und/oder zwischen sauerstoffabgereicherter Luft (20) und Luft (18) in Reihe zum Wärmetausch zwischen Synthesegas (17) und Luft (18) geschaltet wird.

3. Verfahren nach Anspruch 2,
bei dem die Luft (18) zuerst im Wärmetausch mit dem Sauerstoff (19) und/oder mit der sauerstoffabgereicherten Luft (20) und dann im Wärmetausch mit dem Synthesegas (17) erwärmt wird.

4. Verfahren nach Anspruch 1,
bei dem der Wärmetausch zwischen Sauerstoff (19) und Luft (18) und/oder zwischen sauerstoffabgereicherter Luft (20) und Luft (18) parallel zum Wärmetausch zwischen Synthesegas (17) und Luft (18) geschaltet wird.

5. Verfahren nach einem der vorhergehenden Ansprüche,
bei dem die Luft im Wärmetausch auf 700 °C bis 1000 °C, vorzugsweise 800 °C bis 900 °C, aufgeheizt wird.

6. Verfahren nach einem der vorhergehenden Ansprüche,
bei dem zum Anfahren der Membran (10) die Heizenergie aus dem Abgas (21) einer separaten Verbrennung in einem Wärmetausch mit der Luft (18) gewonnen wird.

7. Verfahren nach Anspruch 6,
bei dem das nach dem Wärmetausch mit der Luft (18) abgekühlte Abgas (21) in einem nachgeschalteten Abhitzedampferzeuger (22) zur Erzeugung von Wasserdampf (23) benutzt wird.

8. Verfahren nach einem der vorhergehenden Ansprüche,
bei dem das nach dem Wärmetausch mit der Luft (18) abgekühlte Synthesegas (17) in einem nachgeschalteten Abhitzedampferzeuger (22) zur Erzeugung von Wasserdampf (23) benutzt wird.

9. Verfahren nach einem der vorhergehenden Ansprüche,
bei dem das Synthesegas (17) nach dem Wärmetausch mit der Luft (18) weiter aufbereitet, insbesondere gereinigt wird.

10. Verfahren nach einem der vorhergehenden Ansprüche, bei dem das Synthesegas (17) einer CO-Shift-Reaktion unterzogen wird.

11. Verfahren nach Anspruch 10,
bei dem aus dem Synthesegas (17) nach der CO-Shift-Reaktion CO2 (24) abgeschieden wird.

12. Verfahren nach einem der vorhergehenden Ansprüche,
bei dem bedarfsweise das Synthesegas (17) mit einem Inertmedium, vorzugsweise Wasserdampf (H₂O), verdünnt wird.

13. Verfahren nach einem der vorhergehenden Ansprüche, bei dem die Luft (18) als Verdichterentnahmeluft einem der Gasturbine (2) zugeordneten Verdichterteil (25) entnommen wird.

14. Verfahren nach Anspruch 13,
bei dem die Entnahme der Luft nach der Endstufe am Verdichteraustritt oder wahlweise bei einem geringeren Druckniveau der Verdichterluft durchgeführt wird.

15. Verfahren nach einem der vorhergehenden Ansprüche,
bei dem die abgekühlte, sauerstoffabgereicherte Luft (20) als Verbrennungsluft dem Brenner (4) zugeführt wird.

16. Verfahren nach einem der vorhergehenden Ansprüche,
bei dem Abgase (30) der Gasturbine (2) in einem der Gasturbine (2) nachgeschalteten Abhitzedampferzeuger (22) zur Erzeugung von Wasserdampf (23) benutzt werden.

17. Verfahren nach einem der Ansprüche 7, 8 oder 16,
bei dem der Brennstoff (26) bei der Förderung zur Vergasungseinrichtung (6) mit überhitztem Wasserdampf (23) inertisiert wird.

18. Verfahren nach Anspruch 11,
bei dem der Brennstoff (26) bei der Förderung zur Vergasungseinrichtung (6) mit aus dem Synthesegas (17) abgeschiedenem CO2 (24) inertisiert wird.

19. Kraftwerksanlage (1), insbesondere zur Durchführung des Verfahrens nach einem der vorhergehenden Ansprüche, mit einer Gasturbine (2), der eine Brennkammer (3) mit mindestens einem Brenner (4) zugeordnet ist, mit einem der Brennkammer (3) vorgeschalteten Brennstoffsystem (5), das eine Vergasungseinrichtung (6) mit einer Brennstoffzufuhrleitung (7) für fossilen Brennstoff (26) und eine von der Vergasungseinrichtung (6) abzweigende und in die Brennkammer (3) mündende Gasleitung (8) aufweist, mit einer Membraneinheit (9), umfassend eine Membran (10), zur Abscheidung von Sauerstoff (19) aus Luft (18), wobei die Membraneinheit (9) mit ihrer sauerstoffseitigen Entnahmeseite (11) über eine Sauerstoffleitung (12) an die Vergasungseinrichtung (6) angeschlossen ist,
**dadurch gekennzeichnet, dass** die von der Vergasungseinrichtung (6) abzweigende Gasleitung (8) primärseitig an einen ersten Wärmetauscher (13) angeschlossen ist, so dass sekundärseitig die dem Wärmetauscher (13) zustellbare Luft (18) auf eine Prozesstemperatur aufheizbar und der Membraneinheit (9) zuführbar ist und dass ein zweiter Wärmetauscher (14) primärseitig in die Sauerstoffleitung (12) geschaltet ist und sekundärseitig der Membraneinheit (9) vorgeschaltet ist, so dass die dem zweiten Wärmetauscher (14) zustellbare Luft (18) aufheizbar ist und / oder ein dritter Wärmetauscher (15) primärseitig in eine von der Membraneinheit (9) abzweigende Abluftleitung (27) geschaltet ist und sekundärseitig der Membraneinheit (9) vorgeschaltet ist, so dass die dem dritten Wärmetauscher (15) zustellbare Luft (18) aufheizbar ist.

20. Die Kraftwerksanlage (1) nach Anspruch 19,
bei der der zweite (14) und/oder dritte Wärmetauscher (15) mit dem ersten Wärmetauscher (13) in Reihe geschaltet sind/ist.

21. Die Kraftwerksanlage (1) nach Anspruch 20,
bei der zweite (14) und/oder dritte Wärmetauscher (15) dem ersten Wärmetauscher (13) vorgeschaltet sind.

22. Die Kraftwerksanlage (1) nach Anspruch 19,
bei der der zweite (14) und/oder dritte Wärmetauscher (15) mit dem ersten Wärmetauscher (13) parallel geschaltet sind/ist.

23. Die Kraftwerksanlage (1) nach einem der Ansprüche 19 bis 22, bei der an die Gasleitung (8) ein Brenner (16) geschaltet ist.

24. Die Kraftwerksanlage nach Anspruch 23,
bei der die von der Vergasungseinrichtung (6) abzweigende Gasleitung (8) vor dem Brenner (16) schließbar ist.

25. Die Kraftwerksanlage (1) nach Anspruch 23,
bei der die am Brenner (16) entstehenden heißen Abgase (21) dem ersten Wärmetauscher (13) zustellbar sind.

26. Die Kraftwerksanlage (1) nach Anspruch 25,
bei der die im ersten Wärmetauscher (13) abgekühlten Abgase (21) einem dem ersten Wärmetauscher (13) nachgeschalteten Abhitzedampferzeuger (22) zur Dampferzeugung zustellbar sind.

27. Die Kraftwerksanlage (1) nach einem der Ansprüche 19 bis 26, bei der das im ersten Wärmetauscher (13) abgekühlte Synthesegas (17) einer Synthesegasabhitzenutzungseinrichtung (31) zuführbar ist.

28. Die Kraftwerksanlage (1) nach einem der Ansprüche 19 bis 27, umfassend eine Gasreinigungseinrichtung (32), mittels derer das Synthesegas (17) gereinigt werden kann.

29. Die Kraftwerksanlage (1) nach einem der Ansprüche 19 bis 28, weiter umfassend einen CO-Shift-Reaktor für die CO-Konvertierung.

30. Die Kraftwerksanlage (1) nach Anspruch 29, umfassend eine CO2-Abscheideeinrichtung (28), mittels derer CO2 (24) aus dem Synthesegas (17) abscheidbar ist.

31. Die Kraftwerksanlage nach einem der Ansprüche 19 bis 30, umfassend einen Verdichterteil (25) zur Bereitstellung verdichteter Luft (18).

32. Die Kraftwerksanlage nach Anspruch 31,
bei der der Verdichterteil (25) der Membraneinheit (9) vorgeschaltet ist.

33. Die Kraftwerksanlage nach Anspruch 31,
bei der der Verdichterteil (25) der Brennkammer (3) vorgeschaltet ist.

34. Die Kraftwerksanlage nach einem der Ansprüche 19 bis 33,
bei der sauerstoffabgereicherte Luft (20) der Brennkammer (3) zuführbar ist.

35. Die Kraftwerksanlage nach einem der Ansprüche 19 bis 34,
bei der Abgase (30) der Gasturbinenanlage (29) einem Abhitzedampferzeuger (22) zuführbar sind.

36. Die Kraftwerksanlage (1) nach einem der Ansprüche 19 bis 35, bei der dem Synthesegas (17) bedarfsweise Wasserdampf (23) zuführbar ist.

37. Die Kraftwerksanlage (1) nach einem der Ansprüche 19 bis 36, bei der überhitzter Wasserdampf (23) der Vergasungseinrichtung (6) zuführbar ist.

38. Die Kraftwerksanlage (1) nach einem der Ansprüche 19 bis 37, bei der überhitzter Wasserdampf (23) einer Brennstoffaufbereitung (37) zur Inertisierung des Brennstoffes und als Trägergas zuführbar ist.

39. Die Kraftwerksanlage (1) nach Anspruch 30,
bei der abgeschiedenes CO2 (24) einer Brennstoffaufbereitung (37) zur Inertisierung des Brennstoffes und als Trägergas zuführbar ist.

40. Die Kraftwerksanlage (1) nach einem der Ansprüche 19 bis 39, bei der die Membran eine sauerstoffionenleitende Membran ist.
